## Europäisches Patentamt
## European Patent Office
## Office européen des brevets

(11) Veröffentlichungsnummer: **0 117 843 B1**

# (12) EUROPÄISCHE PATENTSCHRIFT

(45) Veröffentlichungstag der Patentschrift:
**20.11.86**

(21) Anmeldenummer: **84810023.6**

(22) Anmeldetag: **13.01.84**

(51) Int. Cl.⁴: **B 62 D 27/06**, B 62 D 33/02

(54) **Ladepritsche.**

(30) Priorität: **02.02.83 CH 579/83**

(43) Veröffentlichungstag der Anmeldung:
**05.09.84 Patentblatt 84/36**

(45) Bekanntmachung des Hinweises auf die Patenterteilung:
**20.11.86 Patentblatt 86/47**

(84) Benannte Vertragsstaaten:
**AT CH DE FR LI NL SE**

(56) Entgegenhaltungen:
**BE - A - 807 574**
**FR - A - 1 503 771**

**Die Akte enthält technische Angaben, die nach dem Eingang der Anmeldung eingereicht wurden und die nicht in dieser Patentschrift enthalten sind.**

(73) Patentinhaber: **SCHWEIZERISCHE ALUMINIUM AG, CH-3965 Chippis (CH)**

(72) Erfinder: **Hrasche, Heinrich, Zinggenstrasse 7, CH-8953 Dietikon (CH)**

ACTORUM AG

**Beschreibung**

Die Erfindung betrifft eine Ladepritsche für ein Fahrzeug zur Aufnahme von Ladegut, bei welcher Pritschenrahmen über Eckstücke mit Flügellappen verbunden sind und an den Eckstücken Eckrungen festliegen, welche der Aufnahme von Streben für ein Verdeck und einer Verriegelung von Bordwänden dienen.

Es sind Eckverbindungen von Pritschenrahmen bekannt (Allegabulletin, November 1976, Allega AG, Zürich), welche aus gegossenen Leichtmetalleckstücken und daran angeformten Eckrungen bestehen. Die Leichtmetallstücke weisen eine komplizierte Form auf, die je nach der Verwendung der Eckstücke auf der linken oder rechten Fahrzeugseite unterschiedlich ausgebildet ist. Auch die Pritschenrahmen sind dementsprechend unterschiedlich ausgestaltet. Die Eckrunge ist ein Vollprofil mit einer Bohrung zur Aufnahme von Streben für ein Verdeck sowie mit seitlichen Ausnehmungen, in welche eine Riegelnase eingreifen kann. Diese Ausführungsform der Eckverbindung erfordert infolge ihrer unterschiedlichen Ausbildung für die linke bzw. rechte Seite hohe Modell- und Stückkosten und ist an zwei bestimmte Pritschenrahmenprofile gebunden. Die Verdeckführung erfolgt ausschliesslich in den Eckrungen.

Weiterhin ist eine Eckverbindung bekannt (Prospekt der Firma Peter Wenger, 1982, Payerne), bei der vorzugsweise die Eckrunge mit dem Eckstück fest verbunden, insbesondere verschweisst, ist. Die Verbindung mit den Pritschenrahmenprofilen erfolgt über etwa rechtwinklig zueinander abkragende Flügellappen, welche mit dem Pritschenrahmen entweder verschweisst oder verschraubt sind. Bei dieser Ausführungsform fehlt ein Bordwandanschlag vollkommen.

Der Erfinder hat sich zum Ziel gesetzt, eine Eckverbindung von Pritschenrahmen zu entwickeln, welche für alle Ecken der Ladepritsche gleich ist, sowie eine variable Verdeckführung zulässt. Zudem soll in die Eckverbindung ein Bordwandanschlag integriert sein.

Zur Lösung der Aufgabe führt, dass die Flügellappen an eine etwa quadratische Verdeckführung rechtwinklig zueinander verlaufend angeformt sind, deren zwischen den beiden Flügellappen liegende Kante als eine Anschlagleiste für die Eckrungen mit den Eckstücken verbindende Schraubenbolzen ausgebildet ist.

Demnach besteht die erfindungsgemässe Eckverbindung aus zwei voneinander lösbaren Teilen, nämlich dem Eckstück und der Eckrunge. Beide Teile werden bevorzugt aus stranggepressten Profilen hergestellt.

Das Eckstück weist in jedem Fall die gleiche Profilform auf. Kern ist ein etwa quadratisches Hohlprofil, welches als zusätzliche Verdeckführung dienen kann. An dieses Hohlprofil sind in einem rechten Winkel zueinander verlaufend die Flügellappen angeformt, welche über Verbindungselemente an den Pritschenrahmen festgelegt werden können. Die zwischen den beiden Flügellappen liegende Kante der Verdeckführung ist leistenförmig verbreitert und mit Bohrungen versehen. Beim Zusammenbau von Eckrunge und Eckstück werden Schraubenbolzen die Verdeckführung etwa diagonal querend durch die Bohrungen eingeführt und einerseits mit einer Mutter, gegebenenfalls über eine Unterlagsscheibe, an der Aussenfläche der Anschlagleiste festgelegt. Andererseits stützt sich ein Kopf des Schraubenbolzens, ebenfalls gegebenenfalls über eine Unterlagsscheibe, innerhalb der Verdeckführung in der Eckrunge gegen diese ab und presst die Eckrunge gegen das Eckstück. Um den Zugriff zu dem Kopf des Schraubenbolzens zu ermöglichen, weist die Eckrunge Montageöffnungen auf.

Im unteren Bereich sind an dem Eckstück Anschläge vorgesehen, welche aus einem elastischen Material bestehen. Beim Abklappen der Bordwände dienen diese Anschläge als Pufferungen.

Die Eckrungen sind je nach ihrer Verwendung als hintere oder vordere Eckrungen unterschiedlich ausgebildet. Beidseits neben der Verdeckführung der hinteren Eckrungen sollen Hohlräume vorhanden sein, in welche die Verriegelungsorgane der Bordwände eingreifen können. Bei den vorderen Eckrungen ist eine derartige Anordnung nur einfach im Hinblick auf die abklappbare seitliche Bordwand vorgesehen. Die vordere Bordwand liegt dagegen in der Regel fest, wobei erfindungsgemäss vorgesehen ist, dass an die Eckrunge, anstelle des einen Hohlraumes, zwei Profilfahnen angeformt sind, welche die vordere Bordwand klammernd umfassen können.

Im Montagebereich der Eckstücke sind die Eckrungen jeweils so zurückgeschnitten, dass die Eckrungen teilweise die Eckstücke in sich aufnehmen.

Wird die Verdeckführung in den Eckstücken nicht benützt, so kann sie gegebenenfalls durch einen Abschlussdeckel abgedeckt werden.

Diese Eckverbindung ist ausserordentlich flexibel zu handhaben. Durch die für alle vier Ecken gleiche Ausführung der Eckstücke verbilligt sich die Herstellung der Pritsche, wobei sowohl für die seitlichen als auch vorderen und hinteren Pritschenrahmen gleiche Profile Anwendung finden können. Verdeckführung und Bordwandanschlag sind integrierter Bestandteil des Eckstücks.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

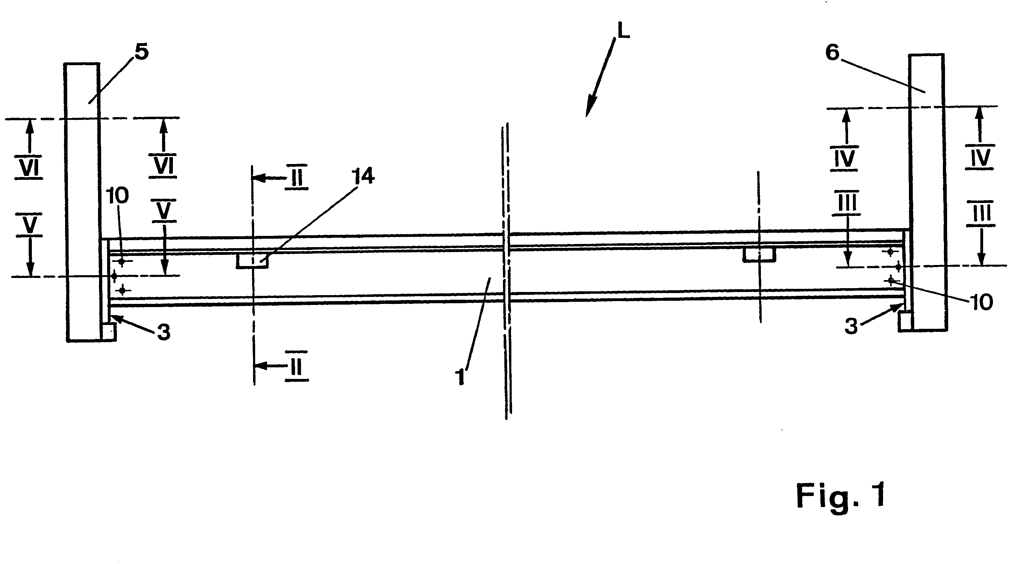

Fig. 1 eine Seitenansicht einer Ladepritsche;

Fig. 2 einen vergrössert dargestellten Schnitt entlang Linie II-II in Fig. 1;

Fig. 3 einen vergrössert dargestellten Schnitt entlang Linie III-III in Fig. 1;

Fig. 4 einen vergrössert dargestellten Schnitt entlang Linie IV-IV in Fig. 1;

Fig. 5 einen vergrössert dargestellten Schnitt entlang Linie V-V in Fig. 1;

Fig. 6 einen vergrössert dargestellten Schnitt entlang Linie VI-VI in Fig. 1.

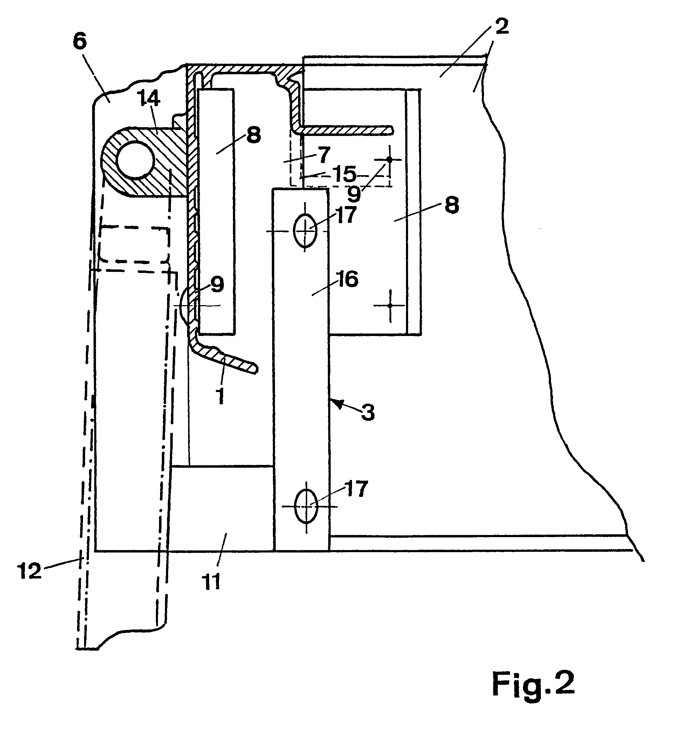

Seitliche Pritschenrahmen 1 und hintere und vordere Pritschenrahmen 2 (Fig. 2) einer Ladepritsche L werden in den Eckpunkten von Eckverbindungen zusammengehalten.

Diese Eckverbindungen bestehen im wesentlichen aus mit den Pritschenrahmen 1 und 2 verbundenen Eckstücken 3 sowie jeweils an den Eckstücken 3 festgelegten Eckrungen oder -pfosten 5 und 6, die jeweils im Hinblick auf ihre Anordnung zum vorderen oder hinteren Pritschenrahmen 2 unterschiedlich ausgebildet sind.

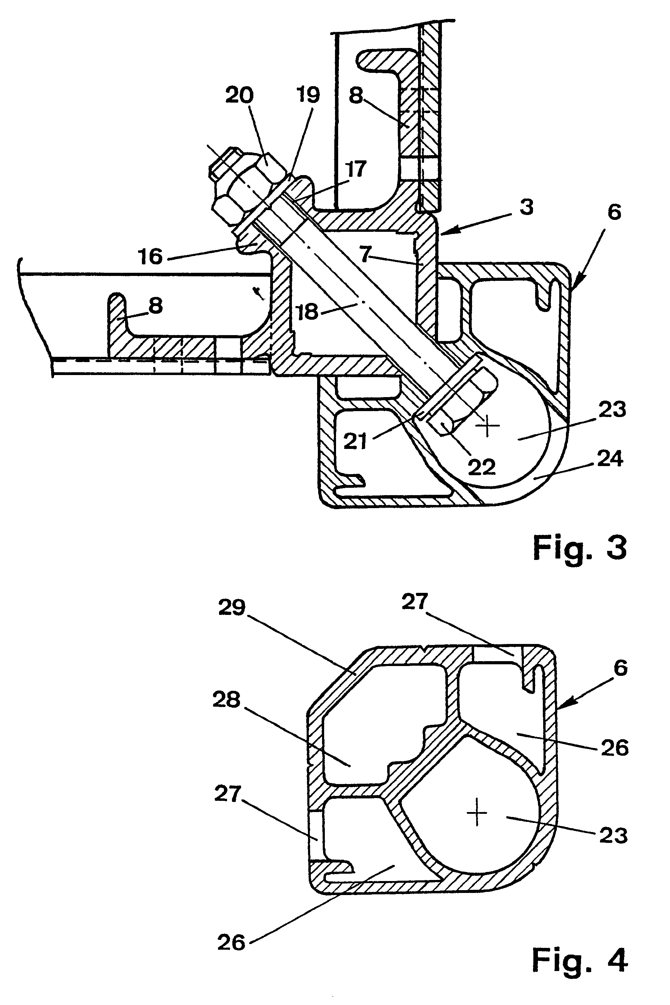

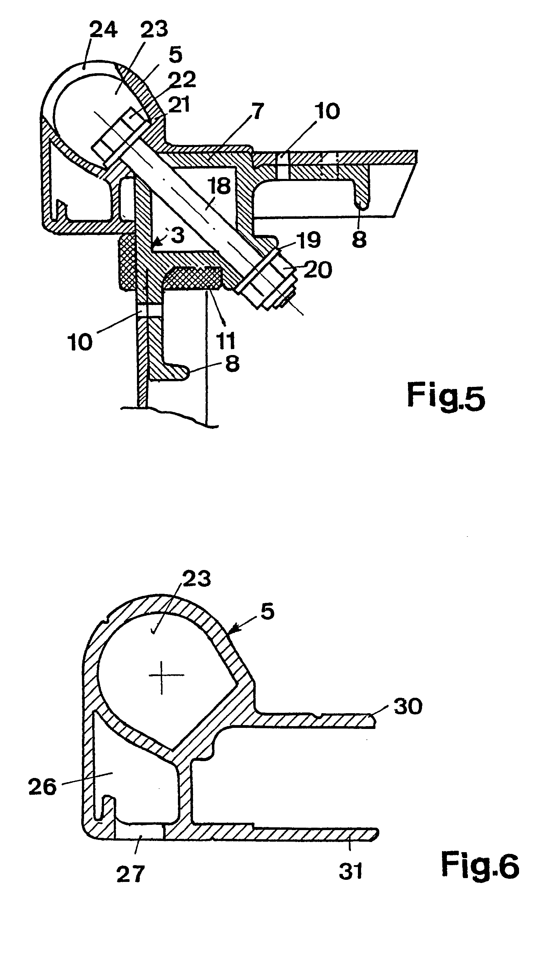

Die Eckstücke 3 weisen dagegen in jedem Fall die gleiche Form auf. Sie werden einstückig aus einem vorzugsweise stranggepressten Profil hergestellt. Dieses zeigt querschnittlich nach Fig. 3 und 5 eine etwa quadratische Verdeckführung 7 sowie seitlich daran angeformte, in einem Winkel von 90° zueinander angeordnete Flügellappen 8. An diesen Flügellappen 8 schlägt jeweils von aussen her ein seitlicher und ein vorderer oder hinterer Pritschenrahmen 1 bzw. 2 an und ist über in Bohrungen 10 einführbare Schrauben 9 oder dgl. Verbindungselemente befestigt.

Weiterhin befindet sich an dem Eckstück 3 ein Anschlag 11 aus elastischem Werkstoff zur Pufferung einer Bordwand 12, welche — in Fig. 2 gestrichelt dargestellt — an Scharnierösen 14 drehbar lagert.

Eine Kante 15 der Verdeckführung 7 zwischen den beiden Flügellappen 8 ist zumindest teilweise zu einer Anschlagleiste 16 verbreitert. Diese Anschlagleiste 16 wird von Bohrungen 17 durchsetzt, welche von die Verdeckführung 7 querenden Schraubenbolzen 18 durchbohrt werden. Einends stützt sich dieser Schraubenbolzen 18 über eine Unterlagsscheibe 19 und eine Mutter 20 gegen die Anschlagleiste 16 ab, andernends presst er über eine Unterlagsscheibe 21 und einen Kopf 22 die Eckrunge 5 bzw. 6 gegen das Eckstück 3. Der Kopf 22 ruht dabei im Innern einer Verdeckführung 23 der Eckrunge 5 bzw. 6 und ist über Montageöffnungen 24 zugänglich.

Der Flügellappen 8 und/oder die Anschlagleiste 16 können als Montagehilfen für das Eckstück 3 dienen, indem sie so ausgelegt sind, dass ihnen der Pritschenrahmen 1 aufsitzt (Fig. 2 gestrichelt dargestellt).

Die hinteren und vorderen Eckrungen 6 und 5 gemäss Fig. 4 und 6 bestehen vorzugsweise aus stranggepressten Profilen. Beide weisen die Verdeckführung 23 auf. Bei der hinteren Eckrunge 6 ist neben der Verdeckführung jeweils ein weiterer Hohlraum 26 vorgesehen, in den — nicht dargestellt — ein Riegel der Bordwand 12 durch eine Öffnung 27 einschiebbar ist. Die hintere Eckrunge 6 weist deshalb zwei Hohlräume 26 mit Öffnungen 27 auf, weil sowohl die beiden Seitenbordwände als auch die hintere Bordwand abklappbar sind. An die Verdeckführung 23 grenzt ein weiterer Innenraum 28, dessen begrenzender Profilsteg 29 jedoch im Bereich des Eckstückes 3 (Fig. 3) entfernt ist.

Bei der vorderen Eckrunge 5 gemäss Fig. 6 braucht neben der Verdeckführung 23 nur eine Öffnung 27 und ein Hohlraum 26 ausgebildet zu sein, welcher einen Riegel der seitlichen Bordwand 12 aufnimmt. Dagegen kragen etwa rechtwinklig zu einer gedachten Achse der Öffnung 27 zwei Profilfahnen 30 und 31 ab, welche in Einbaulage — nicht dargestellt — eine nichtabklappbare vordere Bordwand zwischen sich aufnehmen. Die Profilfahne 31 ist ebenfalls im Bereich des Eckstücks 3 weitgehend entfernt (Fig. 5).

## Patentansprüche

1. Ladepritsche für ein Fahrzeug zur Aufnahme von Ladegut, bei welcher Pritschenrahmen (1, 2) über Eckstücke (3) mit Flügellappen (8) verbunden sind und an den Eckstücken Eckrungen (5, 6) festliegen, welche der Aufnahme von Streben für ein Verdeck und einer Verriegelung von Bordwänden dienen, dadurch gekennzeichnet, dass die Flügellappen (8) an eine etwa quadratische Verdeckführung (7) rechtwinklig zueinander verlaufend angeformt sind, deren zwischen den beiden Flügellappen (8) liegende Kante (15) als eine Anschlagleiste (16) für die Eckrunge (5, 6) mit den Eckstücken (3) verbindende Schraubenbolzen (18) ausgebildet ist.

2. Ladepritsche nach Anspruch 1, dadurch gekennzeichnet, dass der Schraubenbolzen (18) die Verdeckführung (7) diagonal quert und einerseits über eine Mutter (20) gegen die Anschlagleiste (16) abgestützt ist, sowie andererseits mit einem Kopf (22) die Eckrunge (5, 6) gegen das Eckstück (3) presst.

3. Ladepritsche nach Anspruch 2, dadurch gekennzeichnet, dass der Kopf (22) in einer weiteren Verdeckführung (23) in der Eckrunge (5, 6) angeordnet und über Montageöffnungen (24) zugänglich ist.

4. Ladepritsche nach wenigstens einem der Ansprüche 1 bis 3, dadurch gekennzeichnet, dass an dem Eckstück (3) ein Anschlag (11) aus elastischem Werkstoff zur Pufferung der Bordwände (12) angeordnet ist.

5. Ladepritsche nach wenigstens einem der Ansprüche 1 bis 4, dadurch gekennzeichnet, dass in der hinteren Eckrunge (6) neben der Verdeckführung (23) etwa rechtwinklig zueinandner angeordnete Hohlräume (26) mit Öffnungen (27) zur Aufnahme der Bordwandverriegelungen vorgesehen sind.

6. Ladepritsche nach Anspruch 5, dadurch gekennzeichnet, dass die vordere Eckrunge (5) neben der Verdeckführung (23) einen Hohlraum (26) mit einer Öffnung (27) zur Aufnahme der Bordwandverriegelung aufweist, sowie dazu etwa rechtwinklig Profilfahnen (30, 31) zur Aufnahme der vorderen Bordwand zwischen sich abkragen.

7. Ladepritsche nach wenigstens einem der Ansprüche 1 bis 6, dadurch gekennzeichnet, dass Eckstück (3) und/oder Eckrunge (5, 6) aus stranggepressten Profilen, vorzugsweise Aluminiumprofilen, hergestellt sind.

## Claims

1. Load platform for a vehicle for the reception of freight, in which platform frames (1, 2) are connected by way of corner pieces (3) with wing flanges (8) and end stanchions (5, 6) are made fast on the corner pieces and serve for the reception of struts for a hood and a fastening of side and end boards, characterised in that the flanges (8) are formed, extending at right angles to one another, on to an approximately square hood guide (7) of which the edge (15) lying between the two wing flanges (8) is formed as a stop strip (16) for threaded bolts (18) which connect the end stanchions (5,6) with the corner pieces (3).

2. Load platform according to Claim 1, characterised in that the threaded bolt (18) crosses the hood guide (7) diagonally and on the one hand is supported through a nut (20) against the stop strip (16) and on the other hand with a head (22) presses the end stanchions (5, 6) against the corner piece (3).

3. Load platform according to Claim 2 characterised in that the head (22) is arranged in a further hood guide (23) in the end stanchion (5, 6) and is accessible through assembly openings (24).

4. Load platform according to at least one of Claims 1 to 3, characterised in that on the corner piece (3) there is arranged a stop (11) of elastic material for buffering the side and end boards (12).

5. Load platform according to at least one of Claims 1 to 4, characterised in that the cavities (26) arranged at right angles to one another approximately, with openings (27) for the reception of the side and end board fastenings, are provided in the rear end stanchion (6) beside the hood guide (23).

6. Load platform according to Claim 5, characterised in that the forward end stanchion (5) comprises beside the hood guide (23) a cavity (26) with an opening (27) for the reception of the side board fastening, and section tabs (30, 31) for the reception of the front board between them protrude approximately at right angles thereto.

7. Load platform according to at least one of Claims 1 to 6, characterised in that corner piece (3) and/or end stanchions (5, 6) are produced from extruded sections, preferably aluminium sections.

**Revendications**

1. Plancher de véhicule pour recevoir des marchandises, dans lequel les éléments porteurs (1, 2) du plancher sont réunis par l'intermédiaire de pièces d'angle (3) présentant des pattes (8) et dans lequel sont fixés, aux pièces d'angle, des montants d'angle (5, 6) qui servent à recevoir des mâts pour une capote ainsi qu'un verrouillage des ridelles, caractérisé en ce que les pattes (8), sont formées perpendiculaires l'une à l'autre, sur un guide de capote (7) à peu près carré dont l'arête (15) située entre les deux pattes (8) est conçue comme rebord de butée (16) pour des boulons (18) qui réunissent les montants d'angle (5, 6) aux pièces d'angle (3).

2. Plancher selon la revendication 1, caractérisé en ce que le boulon (18) traverse diagonalement le guidage de capote (7) et s'appuie d'un côté par l'intermédiaire d'un écrou (20), contre le rebord de butée (16), et de l'autre côté, presse, avec une tête (22), les montants d'angle (5, 6) contre la pièce d'angle (3).

3. Plancher selon la revendication 2, caractérisé en ce que la tête (22) est disposée dans un autre guide de capote (23) du montant d'angle (5, 6) et en ce qu'elle est accessible par des ouvertures de montage (24).

4. Plancher selon au moins l'une des revendications 1 à 3, caractérisé en ce que contre la pièce d'angle (3) est disposée une butée (11) en matériau élastique pour servir de tampon aux ridelles (12).

5. Plancher selon au moins l'une des revendications 1 à 4, caractérisé en ce que, dans le montant d'angle arrière (6), à côté du guide de capote (23), sont prévus, pour recevoir les verrous de ridelle, des espaces creux (26) avec ouvertures (27) disposés à peu près perpendiculairement l'un par rapport à l'autre.

6. Plancher selon la revendication 5, caractérisé en ce que le montant d'angle avant (5) présente, à côté du guide de capote (23), un espace creux (26) avec une ouverture (27) pour recevoir le verrou de ridelle; et en ce que des oreilles (30, 31), qui lui sont à peu près perpendiculaires, forment un rebord entre elles pour recevoir la ridelle avant.

7. Plancher selon au moins l'une des revendications 1 à 6, caractérisé en ce que la pièce d'angle (3) et/ou les montants d'angle (5, 6) sont fabriqués en profilés, de préférence en profilés d'aluminium, par extrusion.

**Fig. 1**

0 117 843

**Fig.2**

0 117 843

Fig. 3

Fig. 4

9

Fig.5

Fig.6